(19) Europäisches Patentamt / European Patent Office / Office européen des brevets

(11) **EP 3 425 497 B1**

(12) **FASCICULE DE BREVET EUROPEEN**

(45) Date de publication et mention de la délivrance du brevet:
**14.06.2023 Bulletin 2023/24**

(21) Numéro de dépôt: **18182138.0**

(22) Date de dépôt: **06.07.2018**

(51) Classification Internationale des Brevets (IPC):
***G06N 10/00*** *(2022.01)*

(52) Classification Coopérative des Brevets (CPC):
**G06N 10/00**

(54) **ARCHITECTURE INFORMATIQUE HYBRIDE CLASSIQUE-QUANTIQUE**

KLASSISCHE/HYBRIDE QUANTEN-IT-ARCHITEKTUR

CLASSICAL-QUANTUM HYBRID COMPUTER ARCHITECTURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.07.2017 FR 1770720**

(43) Date de publication de la demande:
**09.01.2019 Bulletin 2019/02**

(73) Titulaire: **BULL SAS**
**78340 Les Clayes Sous Bois (FR)**

(72) Inventeur: **ALLOUCHE, Cyril**
**78340 LES CLAYES SOUS BOIS (FR)**

(74) Mandataire: **Plasseraud IP**
**66, rue de la Chaussée d'Antin**
**75440 Paris Cedex 09 (FR)**

(56) Documents cités:
**US-A1- 2006 101 236**

- **BETTELLI S ET AL: "Toward an architecture for quantum programming", EUROPEAN PHYSICAL JOURNAL D: ATOMS, MOLECULES, CLUSTERS ANDOPTICAL PHYSICS, EDP SCIENCES, LES ULIS, FR, vol. 25, no. 2, 1 août 2003 (2003-08-01), pages 181-200, XP002465168, ISSN: 1434-6060, DOI: 10.1140/EPJD/E2003-00242-2**
- **BENOÎT VALIRON ET AL: "Programming the quantum future", COMMUNICATIONS OF THE ACM, vol. 58, no. 8, 23 juillet 2015 (2015-07-23), pages 52-61, XP055475622, United States ISSN: 0001-0782, DOI: 10.1145/2699415**

**Description**

L'invention a trait au domaine de l'informatique ; elle concerne un système informatique hybride classique-quantique, c'est-à-dire un système associant certaines fonctionnalités procurées par un ordinateur classique et d'autres fonctionnalités procurées par un ordinateur quantique.

Un ordinateur est dit classique s'il comprend un processeur classique, c'est-à-dire pourvu de registres formés de circuits de transistors imprimés qui peuvent (ou non, selon leur état) être traversés par des flux d'électrons.

Les combinaisons de transistors autorisent, dans un processeur (et donc dans un ordinateur) classique, la réalisation de fonctions logiques élémentaires (par ex. ET, NON, OU) dont la combinaison permet à l'ordinateur d'exécuter les fonctions mathématiques usuelles (addition, soustraction, multiplication, division) et de conduire des routines (c'est-à-dire des éléments de programme) plus complexes incluant des conditionnalités (*si* ou *if*) et des boucles (*tant que* ou *while*).

Les fonctions logiques sont appliquées à des bits d'entrée (de valeur 0 ou 1), et leurs résultats sont des bits de sortie (de valeur 0 ou 1).

Les mémoires sont divisées en registres dont la taille (c'est-à-dire le nombre de bits) est, par convention, un multiple de huit. Un registre de huit bits est appelé octet. Le nombre d'états différents d'un octet est $2^8$. Dans un ordinateur classique, la capacité d'une mémoire se compte par conséquent en nombre d'octets disponibles.

Un programme informatique classique est ordinairement stocké dans une mémoire sous forme d'une liste d'instructions (code source) rédigées dans un langage de haut niveau (c'est-à-dire dont la terminologie et la syntaxe sont proches d'un langage courant compréhensible par un être humain).

Pour être exécuté, un programme informatique est d'abord converti en langage machine (composé de séquences binaires). La tâche de conversion est accomplie par un programme appelé compilateur. La conversion directe d'un langage de haut niveau au binaire est généralement impossible et nécessite diverses opérations intermédiaires d'analyse lexicale, syntaxique et sémantique qui aboutissent à l'édiction d'une transcription du code source dans un langage de niveau intermédiaire (typiquement l'assembleur), susceptible d'être ensuite converti en langage binaire.

Ce n'est que lorsque le programme est converti en langage binaire que le processeur est capable de l'exécuter. Quelle que soit la complexité d'un programme informatique exécuté sur un ordinateur classique, les seules opérations permettant cette exécution sont les fonctions mathématiques usuelles, les conditionnalités et les boucles, qui reposent elles-mêmes sur les fonctions logiques élémentaires accomplies par les transistors.

La miniaturisation des transistors, rendue possible par la finesse croissante des procédés de gravure des semi-conducteurs, a permis de multiplier la puissance de calcul et la capacité mémoire des ordinateurs classiques. Suivant la conjecture (dite Loi) de Moore, la densité des transistors pouvant être gravés sur un semi-conducteur aurait plus ou moins doublé tous les deux ans depuis les années 1960.

Cependant, en dépit de cette loi (toujours vérifiée) et de la multiplication de puissance espérée pour les années à venir, certaines opérations demeurent (et, on peut le supposer, demeureront) inaccessibles aux ordinateurs classiques.

Un exemple d'opération inaccessible est la factorisation des grands nombres entiers naturels. Par « grand nombre » on entend un nombre codé sur 32, 64, 128, voire 256 bits (ou plus encore). La factorisation peut, certes, être conduite par une succession d'opérations de division et de multiplication. Cependant, si ces opérations permettent de résoudre la factorisation des petits nombres (typiquement $15=3\times5$) en un temps raisonnable, elles ne le permettent pas pour les grands nombres. Ainsi, le temps nécessaire à un supercalculateur contemporain pour factoriser (à l'aide des seules opérations de division et multiplication) un nombre entier codé sur 256 bits (c'est-à-dire un nombre potentiellement aussi grand que $2^{256}$, soit environ $10^{76}$) est très supérieur au milliard d'années.

C'est cette relative incapacité des ordinateurs classiques à résoudre le problème de la factorisation qui a rendu exploitable la cryptographie à chiffrement RSA (Rivest-Shamir-Aldeman), dont la génération des clés publiques repose en effet sur le produit de nombres entiers premiers.

Cependant la technologie de l'ordinateur quantique promet de résoudre ce problème.

Dans un ordinateur quantique, c'est le *qubit* (contraction de *quantum bit*) qui représente l'unité élémentaire de stockage de l'information, par analogie au *bit* qui, lui, représente l'unité élémentaire de stockage de l'information dans un ordinateur classique.

Si la valeur d'un *bit* est toujours - et en permanence - de 0 ou 1 selon l'opération qui lui est appliquée (identité : $0 \rightarrow 0$ ou $1 \rightarrow 1$ ; NOT : $0 \rightarrow 1$ ou $1 \rightarrow 0$), la valeur d'un *qubit* est quant à elle indéterminée car probabiliste.

Une définition assez claire du *qubit* est proposée par Benenti et al, Principles of Quantum Computation and Information, Volume I : Basic Concepts, World Scientific Publishing Co, 2004. Selon cette définition, un *qubit* est un système quantique dont l'état est décrit par une fonction d'onde $\psi$, notée $|\psi\rangle$ selon le formalisme bra-ket de Dirac, dans un espace de Hilbert. La fonction d'onde $|\psi\rangle$ s'écrit sous forme d'une combinaison linéaire des valeurs possibles du qubit :

$$|\psi\rangle = \alpha|0\rangle + \beta|1\rangle$$

Où $|0\rangle$ et $|1\rangle$ représentent les valeurs 0 et 1 (ou états de base) d'un *bit* classique, et où les coefficients $\alpha$ et $\beta$, dénommés « amplitudes de probabilité », sont des nombres complexes normalisés selon la relation suivante :

$$|\alpha|^2 + |\beta|^2 = 1$$

D'un point de vue géométrique, un *qubit* peut être représenté par un point positionné à la surface d'une sphère dite de Bloch (de rayon 1), dont les coordonnées sphériques sont $\theta$ ($0 \leq \theta \leq \pi$) et $\phi$ ($0 \leq \phi \leq 2\pi$).

Dans ces conditions, l'état $|\psi\rangle$ du *qubit* peut s'écrire sous forme de l'équation suivante :

$$|\psi\rangle = \cos\frac{\theta}{2}|0\rangle + e^{i\phi}\sin\frac{\theta}{2}|1\rangle$$

... ou sous forme du vecteur d'état suivant :

$$|\psi\rangle = \begin{pmatrix} \cos\dfrac{\theta}{2} \\ e^{i\phi}\sin\dfrac{\theta}{2} \end{pmatrix}$$

Ces équations témoignent, contre-intuitivement, d'une *continuité* d'état du *qubit,* qui peut prendre une infinité d'états - tant qu'il n'est pas mesuré : dès lors sa valeur est déterminée (0 ou 1). Cette *continuité* fait qu'en théorie un unique *qubit* est susceptible de stocker une quantité infinie d'information, ce qui laisse espérer pour l'ordinateur quantique des performances particulièrement intéressantes en termes de calcul et de stockage, alors même que sa compacité le rend attractif en tant qu'objet (à supposer que ses composants, et notamment ses dispositifs de refroidissement et de lecture, puissent aussi être miniaturisés).

Cependant les lois de la mécanique quantique figent l'état du *qubit* dès sa lecture ; il est impossible de remonter aux valeurs des amplitudes $\alpha$ et $\beta$, et donc impossible de *connaître* en continu l'état instantané du *qubit.*

Dans l'état actuel des connaissances, les *qubits* sont destinés à être utilisés d'une manière analogue aux *bits* classiques, c'est-à-dire à être combinés en un registre de *n qubits* (*n* un entier) susceptibles d'être traités au sein d'un programme informatique.

L'état de *n* qubits est décrit par une fonction d'onde $|\psi\rangle$ généralisée dans un espace de Hilbert à $2^n$ dimensions :

$$|\psi\rangle = \sum_{i=0}^{2^n-1} \alpha_i |i\rangle$$

Où $|i\rangle$ représente les valeurs possibles (ou états de base) des combinaisons de bits classiques, et où les coefficients $\alpha_i$ sont les amplitudes de probabilité de chaque valeur, normalisés selon la relation suivante :

$$\sum_{i=0}^{2^n-1} |\alpha_i|^2 = 1$$

Ainsi, pour deux qubits (*n* = 2) :

$$|\psi\rangle = \alpha_0|00\rangle + \alpha_1|01\rangle + \alpha_2|10\rangle + \alpha_3|11\rangle$$

Avec :

$$|\alpha_0|^2 + |\alpha_1|^2 + |\alpha_2|^2 + |\alpha_3|^2 = 1$$

A la différence d'un ordinateur classique traitant un unique état du registre parmi l'ensemble de ses états possibles, l'ordinateur quantique est en théorie capable de traiter *simultanément* l'ensemble des états possibles du registre, soit $2^n$. En d'autres termes, l'ordinateur quantique effectue *par nature* ses calculs en parallèle. Il en découle que l'addition d'un *qubit* dans un ordinateur quantique multiplie par deux sa puissance de calcul, celle-ci étant donc une fonction exponentielle de la taille du registre. Pour fixer les idées, il suffit d'indiquer que pour $n$ = 300 (soit 300 *qubits*), la taille du registre - et donc le nombre d'états (caractérisant chacun une information) de celui-ci que peut traiter simultanément l'ordinateur - est de $2^{330} \cong 10^{90}$, ce qui correspond au nombre estimé de particules dans notre univers observable.

Dans un avenir proche, et de manière réaliste, il est attendu des ordinateurs quantiques qu'ils puissent résoudre des problèmes actuellement insolubles par les ordinateurs classiques en raison de la capacité de calcul déraisonnable qu'il serait nécessaire de mobiliser - et du temps de calcul requis.

Ainsi, l'algorithme quantique de Shor doit permettre de résoudre le problème de la factorisation d'un entier naturel $N$ en un temps dont l'ordre de grandeur est asymptotiquement algorithmique, c'est-à-dire (en notation dite « grand O » de Landau), de l'ordre de $0(log(N))$. L'algorithme de Shor repose sur l'utilisation d'une transformée de Fourier quantique, dont l'efficacité est très supérieure à celle des transformées de Fourier classiques.

Pour une description de l'algorithme de Shor, voir par ex. la première présentation de cet algorithme par Peter W. Shor lui-même dans Polynomial-Time Algorithms for Prime Factorization and Discrete Logarithms on a Quantum Computer, Proceedings of the 35th Annual Symposium on Foundations of Computer Science, Santa Fe, NM, Nov. 20-22, 1994, IEEE Computer Society Press, pp. 124-134.

Pour une présentation plus contemporaine de l'algorithme de Shor, voir Lomonaco, Shor's Quantum Factoring Algorithm, Proceedings of Symposia in Applied Mathematics, Université du Maryland, 2000.

D'autres algorithmes conduits sur des ordinateurs quantiques permettent de résoudre certains problèmes plus rapidement que les ordinateurs quantiques.

Ainsi, le problème classique de l'interrogation d'une base de données contenant un nombre entier $N$ d'entrées pour en extraire une information donnée est résolu, dans un ordinateur classique, par une succession d'interrogations réitérées $N$ fois (autant que d'entrées).

Or Lov K. Grover a proposé un algorithme quantique permettant, en théorie, d'extraire l'information en un nombre d'interrogations réitérées $\sqrt{N}$ fois seulement, cf. Grover, A fast quantum mechanical algorithm for database search, Proceedings, 28th Annual ACM Symposium on the Theory of Computing (STOC), May 1996, pages 212-219, ou encore Quantum Mechanics help in searching for a needle in a haystack, Phys.Rev.Lett.79:325-328,1997.

Les chercheurs ne se sont pas contentés de proposer des algorithmes prometteurs. A l'image des circuits électroniques qui permettent de modéliser les calculs effectués par un processeur classique, les chercheurs ont proposé pour les calculs quantiques une modélisation sous forme de circuits, construits à l'aide d'un jeu de portes quantiques élémentaires, définies notamment par A. Nielsen & I. Chuang, Quantum Computation and Quantum Information, Cambridge University Press, 10th Anniversary Edition, 2010, chap.ll, pp.171-204.

A la différence d'un circuit électronique classique, un circuit quantique est acyclique (c'est-à-dire qu'il ne comporte aucune boucle) et ne peut être parcouru qu'une seule fois. La mesure ne peut être réalisée qu'à la sortie du circuit, toute mesure intermédiaire modifiant irréversiblement son état, cf. Charles Corge, L'informatique quantique, ISBN 978-2-7298-6314-2, Ellipses, 2011, p.107.

Chaque porte quantique élémentaire effectue une opération prédéterminée sur un ou plusieurs qubits entrants. Sleator & Weinfurter, dans Elementary Gates for quantum computation, Physical Review A, 22 mars 1995, ont même démontré que le jeu comprenant les portes quantiques élémentaires à un qubit (par ex. les portes Hadamard et Pauli), et la porte élémentaire OU exclusif contrôlée (CNOT), est universel dans le sens où tout circuit quantique peut être réduit à une combinaison de ces portes quantiques élémentaires.

On voit que la théorie des ordinateurs quantiques n'en est plus à ses balbutiements.

Cependant l'exécution de l'algorithmique quantique se heurte à des prérequis qui posent autant de difficultés.

Ces prérequis, au nombre de cinq, ont été énumérés par David P. DiVincenzo dans The Physical Implémentation of Quantum Computation, IMB T.J. Watson Research Center, NO, 1er février 2008. Selon DiVincenzo, il faut :

a) Disposer d'un système physique (c'est-à-dire d'un ordinateur quantique) évolutif ayant des qubits bien caractérisés, c'est-à-dire dont les paramètres physiques puissent être connus de manière certaine ;
b) Pouvoir initialiser l'état des qubits de manière fiable - par ex. dans un état correspondant à la valeur |0⟩ ;
c) Bénéficier, dans le système précité, de temps de décohérence sensiblement plus longs que les temps nécessaires aux calculs. Le temps de décohérence est la durée qui sépare un instant auquel l'état d'un qubit est connu de l'instant à partir duquel son état devient incertain en raison d'interactions spontanées avec son environnement ;
d) Disposer d'un jeu de portes quantiques universelles ;
e) Pouvoir mesurer les qubits dans l'état issu de l'exécution du programme.

S'agissant du premier prérequis a), plusieurs technologies ont été imaginées et, pour certaines, mises en oeuvre. Les caractéristiques des trois principales (résonance magnétique nucléaire ou RMN, ions piégés, photonique) sont bien résumées par Corge, qui en évoque d'ailleurs de manière révélatrice les médiocres performances : « *pour l'instant, le seul dispositif expérimental à tenir le record travaille sur sept qubits dans un environnement de résonance magnétique nucléaire. Il factorise 15 en 3×5* » (C.Corge, op.cit.,IX-2, p.244).

Certes, ce commentaire, qui date de janvier 2011, peut être apparaître obsolète, d'autant que la RNM, déjà critiquée par DiVincenzo (op.cit. p.3 : « *la RMN ne sera jamais un schéma évolutif pour le calcul quantique* ») tend à être supplantée par les ions piégés, dont le concept est déjà ancien (cf. Cirac & Zoller, Quantum Computations with Cold Trapped Ions, Institut für Theoretische Physik, Universität Innsbruck, 30 Nov. 1994).

Cependant les travaux d'expérimentation des ions piégés (notamment ceux conduits à la suite de Cirac & Zoller par le Pr. Blatt et son équipe de l'Université d'Innsbruck), semblent à peine plus avancés, bien qu'ayant depuis quelque temps permis l'implémentation de certaines fonctionnalités de base nécessaires à tout calcul quantique (cf. par ex. Schmidt-Kaler, Blatt et al, Realization of the Cirac-Zoller controlled-NOT quantum gate, Nature 422, 408-411, 27 Mars 2003).

Toujours est-il que même les équipes les plus avancées le reconnaissent dans leurs dernières publications : « *les plateformes matérielles* [des processeurs à ions piégés, NdA] *sont encore loin de la taille requise pour rendre négligeables les erreurs sur les données encodées* » (Blatt, Schmidt-Kaler et al, Assessing the progress of trapped-ion processors towards fault-tolerant quantum computation, Cornell University Library, 8 mai 2017, arXiv:1705.02771).

S'agissant du deuxième prérequis b), les problématiques issues de la nécessité de l'initialisation des qubits dans un état déterminé est, pour ainsi dire, résolue - à tout le moins dans la technologie des ions piégés, comme le reconnaît DiVincenzo se référant à Cirac & Zoller (op.cit.). En pratique, les qubits peuvent être initialisés dans l'état |0⟩ par refroidissement effectué au moyen d'un laser.

Quant au troisième prérequis c), il semble que les ions piégés l'aient également (au moins temporairement) résolu. Certains prétendent avoir, dans certaines conditions, supprimé le phénomène de décohérence (sur l'emploi à cet effet d'ions Béryllium $^9Be^+$, cf. par ex. Kielpinski et al, *A Decoherence-Free Quantum Memory Using Trapped Ions,* Phys. Rev. Lett. 103, 2009). Sans nécessairement aller jusque-là, on observe couramment des temps de décohérence suffisamment longs au regard des temps de calculs requis. C'est notamment le cas des ions Calcium $^{40}Ca^+$, dont l'état quantique $D_{5/2}$, obtenu par pompage optique laser accordé à 729 nm, est métastable pendant environ 1 s.

Le quatrième et le cinquième prérequis d) et e) semblent également avoir été résolus dans le cadre des ions piégés. D'une part, les portes quantiques fondamentales ont été expérimentées depuis déjà un certain temps (sur la porte OU exclusif contrôlée, cf. notamment Schmidt-Kaler et al, Realization of the Cirac-Zoller controlled-NOT quantum gate*,* op.cit.). D'autre part, la mesure de l'état des qubits peut être effectuée optiquement, comme l'explique Corge (op.cit., IX-4 p.278) : « *un ion porté à l'état excité qui retombe spontanément à l'état fondamental donne lieu à un signal de fluorescence dû au grand nombre de photons diffusés* (...), *l'état de chaque qubit [pouvant] être détecté à l'aide d'une caméra* ».

Cependant la satisfaction des prérequis a) à e) édictés par DiVincenzo ne permet pas de faire fonctionner un ordinateur (ou un processeur) quantique de manière *productive* en tant qu'outil informatique. A cette fin, deux autres prérequis s'y ajoutent. Il faut en effet :

f) Disposer d'un langage de programmation quantique permettant de faire exécuter des algorithmes quantiques par le processeur quantique ;
g) Pouvoir insérer le processeur quantique dans une architecture informatique à même de dialoguer avec lui.

Bien que nous ayons séparé ces deux nouveaux prérequis à des fins de compréhension, ils sont en réalité liés, comme nous le verrons ci-après.

S'agissant des langages de programmation quantique, plusieurs ont été proposés dès les années 2000. Pour une revue des langages du début de ces années-là, voir par ex. P. Selinger, A Brief Survey Of Quantum Programming Languages, Proceedings of the Seventh International Symposium on Functional and Logic Programming, pp.1-6, 2004.

De nouveaux langages sont apparus encore récemment, à l'initiative de différents groupes de travail conduisant des recherches sur l'algorithmique quantique. Citons notamment, dans l'ordre d'apparition :

- Scaffold, cf. A. Abhari et al, Scaffold: Quantum Programming Language, IARPA, U.S. Government, 24 juillet 2012 ;
- Quipper, cf. A. Green et al, Quipper: A Scalable Quantum Programming Language, ACM SIGPLAN Notices 48(6):333-342, 2013 ;
- Quil, cf. R. Smith et al, A Practical Quantum Instruction Set Architecture, Rigetti Computing, Cornell University Library, arXiv:1608.03355, 11 août 2016 ;
- OpenQASM, cf. A. Cross et al, Open Quantum Assembly Language, IBM, 10 janvier 2017.

Quelles que soient les fonctionnalités (et l'ergonomie) du langage, se posent les questions de l'implémentation du programme et de sa traduction (au moyen d'un compilateur), de sorte à permettre son exécution effective.

Parmi les acteurs précités, les équipes de Rigetti semblent être à ce jour les plus conscientes des difficultés d'implémentation et d'exécution d'un langage quantique, en particulier lorsque des calculs quantiques sont programmés au sein d'algorithmes hybrides classique/quantique, qui nécessitent une communication entre un ordinateur classique et un ordinateur quantique (cf. R. Smith et al, op.cit. pp.1-2).

Cependant les équipes de Rigetti n'ont pour l'instant abouti qu'à la formulation du problème et à la proposition d'un modèle abstrait, dénommé Machine Quantique Abstraite (Quantum Abstract Machine, QAM). Cette QAM est supposée représenter un dispositif de calcul quantique à usage général (general-purpose quantum computing device), et être implémentée « *soit classiquement soit sur du matériel quantique* », cf. R. Smith et al, op.cit. p.2.

Ce modèle n'aurait, pour l'instant, été implémenté par Rigetti que classiquement en tant que « *machine virtuelle quantique* » (Quantum Virtual Machine ou QVM, cf. R. Smith et al, op.cit., V-F pp.12). En d'autres termes, il s'agit d'un simulateur.

Quant à l'implémentation sur un processeur quantique, qui ne semble pas avoir été testée par les équipes de Rigetti, elle se heurte non seulement à des difficultés pratiques relatives à la technologie des ordinateurs quantiques, mais également à des difficultés plus fondamentales, liées à la nature même de l'informatique quantique.

En effet, un programme (et a fortiori un ordinateur) quantique ne permet d'exécuter :

- ni les conditionnalités (si ou if),
- ni les boucles (tant que ou while).

Ces routines, faciles à mettre en oeuvre sur un ordinateur classique (et de fait très répandues), ne le sont pas sur un ordinateur quantique car elles supposent que soit interrogée la valeur d'une *variable,* ce qui brise le principe quantique d'*incertitude.*

Ces routines constituent le fondement de la fonction de contrôle (autrement appelée supervision) exercée ordinairement par les processeurs classiques. On comprend donc que la fonction de contrôle soit impossible à implémenter sur un ordinateur (ou un processeur) quantique.

L'art antérieur US2006/0101236 décrit la supervision d'un processeur quantique par un processeur classique, dans une relation de collaboration entre le processeur classique et le processeur quantique.

L'art antérieur « The European Physical Journal D, 20030801 Springer Berlin Heidelberg, Berlin/Heidelberg / Vol:25,Nr:2,Page(s):181 - 200 / XP002465168 » décrit une relation de collaboration entre le processeur classique et le processeur quantique.

L'art antérieur « COMMUNICATIONS OF THE ACM, 20150723 Association for Computing Machinery, Inc, United States / Vol:58,Nr:8,Page(s):52 - 61 / XP055475622 » décrit une relation de collaboration entre le processeur classique et le processeur quantique.

Le besoin existe par conséquent d'une architecture informatique *concrète,* permettant effectivement de faire exécuter des programmes hybrides, au sens où ces programmes comprennent des routines classiques (notamment de contrôle) exécutables par un ordinateur (ou un processeur) classique, et des routines quantiques (tel qu'un algorithme de Shor ou de Grover) exécutables par un ordinateur (ou un processeur) quantique.

Pour répondre à ce besoin, il est proposé un système informatique comprenant, d'une part, un ordinateur classique, équipé d'un processeur classique pourvu d'au moins un registre à transistors et, d'autre part, un processeur quantique, pourvu d'au moins un registre quantique, et dans lequel :

- le processeur quantique est configuré en tant qu'esclave de l'ordinateur classique,
- l'ordinateur classique est configuré en tant que maître pour superviser le processeur quantique au moyen des instructions suivantes :

  ◦ chargement, consistant à communiquer au processeur quantique une définition d'un circuit quantique à implémenter ;
  ◦ initialisation, consistant à communiquer au processeur quantique des valeurs initiales auxquelles régler le ou les registres quantiques ;
  ◦ exécution, consistant à communiquer au processeur quantique un ordre d'implémentation du circuit quantique ;
  ◦ obtention, consistant à interroger le processeur quantique pour obtenir des valeurs finales des registres quantiques issues de l'implémentation du circuit.

Selon un mode de réalisation avantageux, l'ordinateur classique est programmé pour générer le circuit quantique à la volée.

Une architecture du circuit quantique à implémenter peut être mémorisée dans une mémoire de l'ordinateur classique, ou dans une mémoire associée au processeur quantique.

Selon un mode de réalisation particulier, le ou les registres quantiques sont à ions piégés.

D'autres objets et avantages de l'invention apparaîtront à la lumière de la description d'un mode de réalisation, faite ci-après en référence aux dessins annexés dans lesquels :

- la **FIG.1** est une vue schématique montrant un système informatique comprenant un ordinateur classique et un ordinateur quantique en réseau ;
- la **FIG.2** est une vue schématique en perspective montrant un exemple de réalisation d'une architecture physique au sein de laquelle peut être intégré l'ordinateur classique ;
- la **FIG.3** est une vue schématique en perspective montrant un exemple de réalisation d'une partie de l'ordinateur quantique et de son mode de traitement de l'information quantique ;
- la **FIG.4** (planche 6) est une représentation schématique d'un exemple de circuit logique quantique complexe correspondant au traitement quantique d'un algorithme de Grover ;
- la **FIG.5,** subdivisée en raison de sa taille en trois parties **FIG.5A, FIG.5B** et **FIG.5C** (planches 3 à 6), est une représentation schématique d'un circuit logique quantique simplifié équivalent au circuit logique complexe de la **FIG.4.**

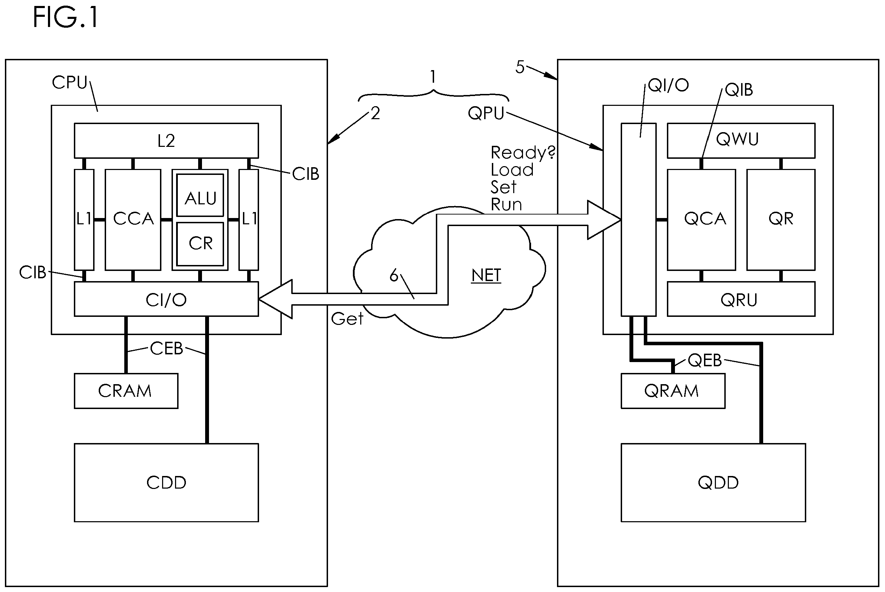

Sur la **FIG.1** est représenté un système **1** informatique, c'est-à-dire un système configuré pour traiter des données de manière automatique, au moyen d'un ou plusieurs programmes incluant des algorithmes. Le traitement peut notamment comprendre la collecte, le tri, le stockage en mémoire, le calcul, la transmission de données.

L'avènement de l'ordinateur quantique oblige, par son architecture et son fonctionnement sensiblement différents de l'ordinateur classique, à apporter pour les besoins de la présente description quelques précisions au champ lexical de l'informatique.

On peut néanmoins se référer à la définition proposée par John Von Neumann dans First Draft of a Report on the EDVAC, Moore School of Electrical Engineering, University of Pennsylvania, 30 juin 1945.

Selon Von Neumann (op.cit. {2.0} « *Main subdivisions of the system* »), qui établit un parallèle fonctionnel avec le cerveau humain, l'ordinateur comprend essentiellement cinq parties :

- premièrement, une unité centrale arithmétique (CA, *Central arithmetical*), chargée des opérations élémentaires $(+, -, \times, \div)$, éventuellement étendues à des opérations plus complexes (racine, logarithme, etc.)
- deuxièmement, une unité centrale de contrôle (CC, *Central control*), chargée de la mise en oeuvre d'instructions selon une séquence prédéfinie ;
- troisièmement, une mémoire (M, *memory*), destinée au stockage de données ;
- quatrièmement, une unité d'entrée de données (*input*) en provenance d'un dispositif de mémoire externe (R, *outside recording medium*) ;
- cinquièmement, une unité de sortie de données (*output*) vers le dispositif de mémoire externe.

Dès 1945, Von Neumann, qui raisonnait en algèbre binaire, distinguait différents types de mémoire et indiquait qu'il convenait de subdiviser la mémoire selon les fonctions appliquées aux données.

Aujourd'hui, les ordinateurs classiques (cf. la définition que nous nous donnons ci-après) embarquent effectivement plusieurs types de mémoires, que Cazes & Delacroix, dans Architecture des machines et des systèmes informatiques, Dunod, 5e édition, 2015, p.192, classent en deux catégories :

- les mémoires de travail, « *actives dans l'exécution d'un programme* »,
- les mémoires de stockage, « *ayant pour objet de conserver manière permanente de grandes quantités d'information* (...) [mais qui] *ne participent pas directement à l'exécution d'un programme* ».

Les mémoires de travail sont elles-mêmes divisées en plusieurs types :

- les mémoires vives (RAM, *Random Access Memory*), sur lesquelles des opérations de lecture et d'écriture sont possibles, et qui sont de deux types :

  ◦ les mémoires statiques (SRAM, *Static RAM*), dans lesquelles chaque bit de mémoire (de valeur 0 ou 1) est déterminé par l'état d'une bascule à transistors ; ce type de mémoire est habituellement réservé à la fonction *cache* (cf. ci-après) ;
  ◦ les mémoires dynamiques (DRAM, *Dynamic RAM*), également appelées mémoire(s) centrale(s), dans lesquelles chaque bit de mémoire est déterminé par l'état (chargé ou déchargé) d'un condensateur associé à un transistor unique ;

- les mémoires mortes (ROM, *Read-Only Memory*), rémanentes, dans lesquelles sont habituellement stockés des programmes de redémarrage (boot) de l'ordinateur, et qui stockent l'information même en l'absence d'alimentation électrique ;
- les registres, qui sont des mémoires spécialisées généralement accolées à l'unité centrale de contrôle.

Pour les besoins de la présente description, on appelle « processeur » (en anglais *Processor* ou *Processing Unit* ou *PU*) toute unité de traitement regroupant une unité centrale de contrôle (telle que définie par Von Neumann) et au moins un registre.

Il convient de généraliser la notion de « registre », car la définition fournie ci-dessus est liée à la notion de mémoire, qui suppose que toute information stockée puisse être lue à tout instant sans en modifier la valeur (on dit que l'information mémorisée est *réversible* ou *déterminée*).

Or, en mécanique quantique, toute mesure effectuée sur un système (par ex. un atome) modifie l'état de ce système. Typiquement, toute tentative de mesure par bombardement photonique de l'état d'un électron (initialement sur une couche électronique donnée), fournit à l'électron une énergie susceptible de le faire changer d'état (c'est-à-dire de couche électronique). On dit que l'information mémorisée est *non réversible* ou *indéterminée.*

Aussi, pour les besoins de la présente description, on définit un registre comme un dispositif incluant des composants unitaires à changement d'état, susceptibles d'être localisés, et sur chacun desquels on peut agir pour en déterminer ou pour en modifier l'état instantané.

Dans la présente description, l'adjectif « classique » n'a pas d'acception historique mais désigne la technologie des circuits intégrés à transistors, dont on rappelle qu'il s'agit de composants fabriqués à l'aide de matériaux semi-conducteurs et capables de laisser un courant électrique (c'est-à-dire un flux d'électrons) passer (ou non) entre des électrodes.

Ainsi :

- Un registre classique est un registre dont les composants unitaires obéissent aux lois d'Ohm - en pratique des transistors (ou des bascules à transistors).
- Un processeur classique est une unité de traitement dont le(s) registre(s) intègre(nt), pour la mémorisation des bits, des circuits (typiquement des bascules) à transistors.
- Un ordinateur classique est un ordinateur comprenant au moins un processeur classique, et un ou plusieurs autres composants périphériques au processeur (par ex. un ou plusieurs modules de mémoire vive, un ou plusieurs modules de mémoire morte, et un ou plusieurs modules de mémoire de stockage, typiquement un disque dur).
- Un registre quantique est un registre dont les composants unitaires obéissent aux lois de la mécanique quantique - en pratique, des molécules, des atomes ou des particules subatomiques.
- Un processeur quantique est une unité de traitement dont le(s) registre(s) est (sont) quantique(s).
- Un ordinateur quantique est un ordinateur comprenant au moins un processeur quantique, et un ou plusieurs autres composants périphériques au processeur (par ex. une unité d'écriture susceptible de modifier l'état du registre quantique, et une unité de lecture susceptible de mesurer l'état du registre quantique).

Le système **1** informatique représenté sur la **FIG.1** comprend au moins :

- un ordinateur **2** classique, équipé d'un processeur classique (Classical Processing Unit, **CPU**), et
- un processeur quantique (Quantum Processing Unit, **QPU**).

Dans l'architecture illustrée sur la **FIG.1,** le **CPU** comprend, de préférence rassemblés sur une puce :

- une unité centrale de contrôle (**CCA**) et, reliés à celle-ci par un ou plusieurs des bus interne(s) de communication (**CIB**) :
- une unité centrale arithmétique (ordinairement appelée unité arithmétique et logique ou **ALU**),
- un ou plusieurs registre(s) (**CR**) à transistors,
- une unité de gestion des entrées et sorties (**CI/O**).

Dans l'exemple illustré, le **CPU** comprend en outre :

- une ou plusieurs unités de mémoire cache, par ex. une unité de mémoire cache de premier niveau (**L1**), et une unité de mémoire cache de deuxième niveau ou (**L2**).

Comme illustré schématiquement sur la **FIG.1,** l'ordinateur **2,** outre le **CPU,** au moins une unité de mémoire vive (**CRAM**) et au moins une unité de mémoire de stockage (**CDD**), avec lesquelles le **CPU** (et plus précisément l'unité centrale de contrôle **CCA** dialogue par des bus externes de communication (**CEB**) via l'unité **CI/O** de gestion des entrées et sorties.

L'ordinateur **2** classique est conçu pour exécuter des instructions issues d'un programme, à partir des fonctions logiques élémentaires permises par les circuits à transistors (notamment les opérations mathématiques simples : $+,-,\times,\div$ et les opérateurs booléens, typiquement ET, OU, NON, NON-ET, NON-OU, OU EXCLUSIF, NON-OU EXCLUSIF).

Le programme est stocké dans la mémoire **CDD** de stockage. A l'appel du programme, celui-ci est compilé puis placé en mémoire vive **CRAM** pour être exécuté par le **CPU,** l'exécution étant elle-même subdivisée en opérations simples cadencées par une horloge interne couplée à l'unité **CCA** centrale de contrôle.

L'architecture d'un programme, notamment dans la programmation orientée objet, est généralement modulaire ; le programme comprend dans ce cas un noyau (*kernel*), qui contient des instructions générales, notamment de coordination, et des sous-programmes (*subroutines*), qui contiennent des instructions spécialisées. Noyau et subroutines peuvent être mémorisés en tant que fichiers séparés au sein de la mémoire **CDD** de stockage.

Au lancement du programme, seul le noyau peut être chargé dans la mémoire vive **CRAM** ; dans ce cas, ce n'est qu'ultérieurement et sur commande du **CPU** qu'un sous-programme peut, au besoin, être appelé par le noyau et également compilé et chargé dans la mémoire vive **CRAM.** Ce type d'architecture permet d'optimiser la capacité mémoire mobilisée par l'exécution d'un programme.

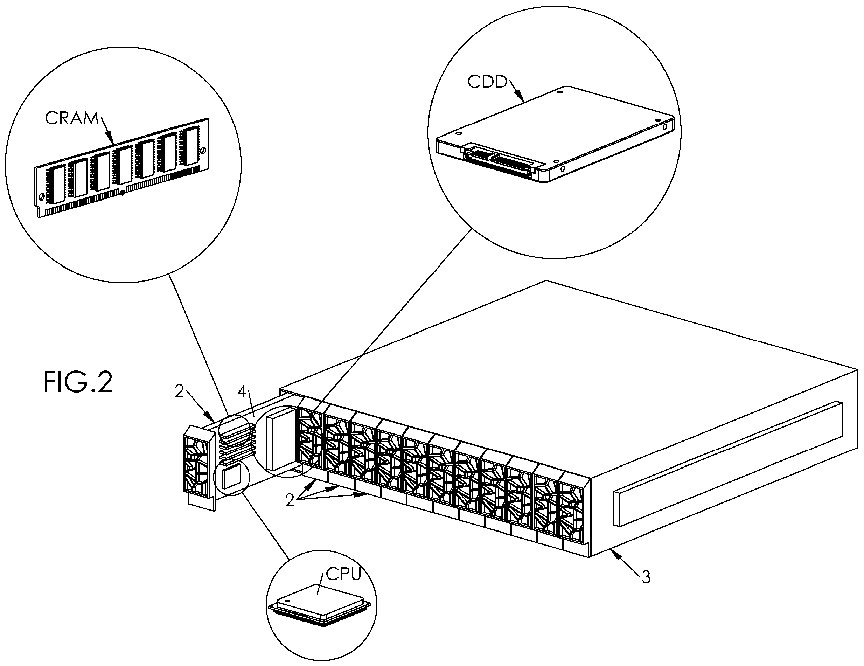

On a représenté sur la **FIG.2** une réalisation matérielle concrète de l'ordinateur **2** classique, fournie à titre d'exemple. Dans l'exemple illustré, l'ordinateur **2** se présente sous forme d'un module à tiroir intégré à un serveur **3** (lequel est éventuellement empilable pour être monté dans armoire informatique). Ce module comprend une carte **4** sur laquelle sont montés au moins un **CPU,** au moins une unité de mémoire vive (**CRAM**) et au moins une unité de mémoire de stockage (**CDD**). Un serveur **3** de ce type est par ex. commercialisé par la demanderesse et ses filiales sous la marque BULLION.

Plusieurs ordinateurs **2** (le cas échéant plusieurs serveurs **3**) de ce type peuvent être mis en réseau pour procurer des capacités de calcul (et de stockage) accrues et obtenir des performances qui justifient que soit qualifié de « supercalculateur » le système informatique ainsi réalisé.

Dans l'architecture illustrée sur la **FIG.1,** le **QPU** comprend :

- une unité centrale de contrôle (**QCA**),
- un ou plusieurs registre(s) quantique(s) (**QR**).

Le **QPU** comprend en outre, reliées à l'unité centrale de contrôle par un ou plusieurs bus **QIB** de communication :

- une unité **QI/O** de gestion des entrées et sorties, reliée à l'unité **QCA** centrale de contrôle,
- une unité **QWU** d'écriture configurée pour interagir avec le(s) registre(s) quantique **QR** pour en modifier l'état ;
- une unité **QRU** de lecture configurée pour déterminer un état instantané du registre **QR** quantique.

Comme illustré schématiquement sur la **FIG.1,** le **QPU** est intégré à un ordinateur **5** quantique (cette nature quantique lui étant conférée par le **QPU,** qui tient lui-même sa nature quantique de son registre **QR**).

Dans l'exemple illustré, l'ordinateur **5** quantique comprend en outre au moins une unité de mémoire vive (**QRAM**) et au moins une unité de mémoire de stockage (**QDD**), avec lesquelles le **QPU** (et plus précisément l'unité **QCA** centrale de contrôle) dialogue par des bus externes de communication (**QEB**) via l'unité **QI/O** de gestion des entrées et sorties.

Comme illustré sur la **FIG.1,** le **CPU** et le **QPU** sont reliés par un bus **6** externe de communication. Concrètement, ce bus **6** relie leurs unités **CI/O, QI/O** de gestion des entrées et sorties. Selon un mode particulier de réalisation, les processeurs **CPU** et **QPU** sont distants. Dans ce cas, le bus **6** se présente par ex. sous la forme d'un câble, par ex. à conducteur(s) métallique(s) (typiquement de type Ethernet) ou à conducteur optique (typiquement en fibre de verre). La liaison entre le **CPU** et le **QPU** peut se faire via un réseau (**NET**), qui peut être local (*Local Area Network* ou LAN), métropolitain (*Metropolitan Area Network* ou MAN) ou encore étendu (*Wide Area Network* ou WAN).

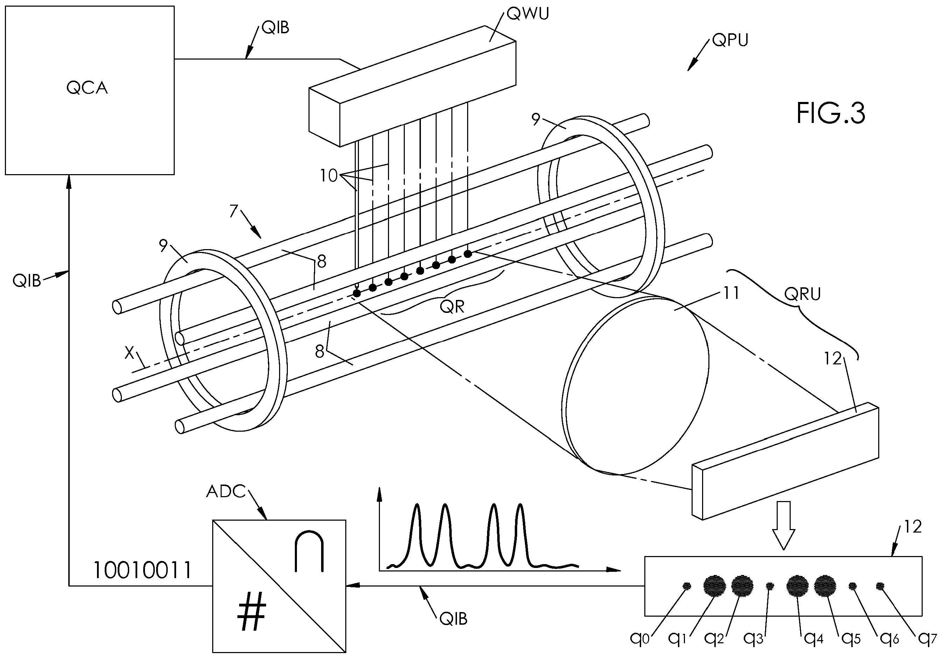

Un exemple (non limitatif) d'architecture du **QPU** est illustré sur la **FIG.3,** sur laquelle un unique registre quantique **QR** est illustré (le **QPU** pourrait en comporter plusieurs). Dans cet exemple, le registre quantique **QR** fonctionne à l'aide de la technologie des ions piégés, chaque ion (représenté sur la **FIG.3** par une sphère noire) étant représentatif d'un qubit. A proprement parler, le registre quantique **QR** est *constitué* d'une rangée d'ions (par ex. des ions calcium $^{40}Ca^+$), confinés au sein d'un piège de Paul **7.**

Il existe plusieurs techniques de réalisation d'un piège de Paul. Dans la technique illustrée, expliquée en détail par Corge (op.cit. p.265), le piège **7** comprend quatre électrodes **8** sous forme de tiges, soumises diagonalement deux à deux à une tension électrique alternative créant un potentiel quadripolaire qui assure le confinement des ions sur un axe **X** de symétrie longitudinal du piège **7.** Les électrodes **8** laissent cependant les ions libres de se déplacer le long de l'axe **X.** Pour immobiliser les ions sur l'axe **X,** le piège **7** est en outre équipé d'une paire d'électrodes **9** annulaires qui induisent un champ électrique statique.

Il peut être démontré (et l'expérience le confirme) que, si l'on introduit plusieurs ions (on note *n* leur nombre), dans un tel piège **7,** ils s'alignent le long de l'axe **X** et s'écartent mutuellement d'une distance qui résulte d'un équilibre entre une force de confinement longitudinal (induite par le champ électrique statique généré par les électrodes **9** annulaires) et une force de répulsion induite par l'interaction électrostatique (dite de Coulomb) entre les ions eux-mêmes.

La distance séparant deux ions est de l'ordre du $\mu$m ($10^{-6}$ m). Les ions sont animés chacun de pulsations qui se mesurent en nm ($10^{-9}$ m).

L'introduction des ions peut être effectuée par injection dans le piège **7** (maintenu sous vide poussé) d'un gaz dont les atomes sont ionisés par collision avec un jet d'électrons émis par un filament (typiquement de tungstène) porté à une température élevée au moyen d'un courant électrique de forte intensité. Pour refroidir les ions ainsi générés, on peut les soumettre à un bombardement photonique au moyen d'un faisceau laser qui se propage le long de l'axe **X** à une longueur d'onde choisie pour produire un effet Doppler qui ralentit les ions jusqu'à presque les immobiliser (sans les affranchir de pulsations nanométriques, comme évoqué ci-dessus). La température des ions ainsi piégés est de l'ordre du millikelvin.

Dans la configuration illustrée, les ions sont au nombre de huit ($n = 8$) pour former un registre **QR** quantique à huit qubits. Ce nombre n'est fourni qu'à titre d'exemple non limitatif.

L'ion calcium $^{40}$Ca$^+$ comprend deux états quantiques, procurés respectivement par deux états énergétiques adoptés par les électrons de la couche externe :

- un état fondamental, noté $S_{1/2}$, qui correspond au niveau énergétique le plus bas et auquel est associée la valeur $|0\rangle$ du qubit représenté par l'ion,
- un état excité, noté $D_{5/2}$, qui correspond au niveau énergétique le plus élevé et auquel est associée la valeur 11) du qubit représenté par l'ion.

L'état excité est métastable, sa durée de vie moyenne étant d'environ 1 seconde (par comparaison, un état instable peut avoir une durée de vie de l'ordre de $10^{-8}$ seconde, ce qui est insuffisant pour conduire des calculs).

Les ions (et donc les qubits) peuvent être manipulés au moyen d'impulsions fournies par des faisceaux **10** laser (dont la longueur d'onde, l'intensité et la durée d'illumination peut être réglée), chaque faisceau **10** étant focalisé sur un ion particulier.

Chaque laser **10** provoque un changement d'état énergétique de l'ion bombardé. L'état instantané de l'ion n'est pas connu ; seule une transition vers un niveau moins énergétique, qui s'accompagne de l'émission de photons, peut être constatée.

C'est pourquoi l'unité **QWU** d'écriture, pilotée par l'unité centrale de contrôle **QCA** et illustrée schématiquement sur la **FIG.3,** comprend une rangée de sources laser, dont on a représenté un faisceau **10** pointant sur l'ion situé à l'extrême gauche, et dont on a symbolisé les autres sous forme de traits mixtes.

Les ions ne sont pas complètement isolés les uns des autres, et l'état d'énergie de chacun peut avoir une incidence sur l'état d'énergie des autres. La chaîne d'ions se comporte ainsi comme un système dont les éléments (c'est-à-dire les ions, représentatif chacun d'un qubit), peuvent être *couplés* (cf. Corge, op.cit. p.269).

Le caractère indéterminé (à un instant donné) de l'état d'énergie adopté par les ions du registre **QR** interdit à celui-ci de réaliser les fonctions mathématiques simples ($+,-,\times,\div$) et les opérateurs booléens.

En revanche, cette configuration permet de réaliser des portes dites quantiques, qui modélisent des opérations algébriques matricielles appliquées à des vecteurs d'état représentatifs des qubits.

La littérature (cf. par ex. Nielsen & Chuang, op.cit. p.171 et s.) a défini un certain nombre de modèles de portes logiques quantiques élémentaires, chacune associée à une matrice de transfert déterminée.

Citons à titre d'exemple :

- la porte d'Hadamard, notée *H*, qui applique sa fonction de transfert à un unique *qubit* et est définie comme suit :

$$H \triangleq \frac{1}{\sqrt{2}}\begin{pmatrix} 1 & 1 \\ 1 & -1 \end{pmatrix}$$

- les portes de Pauli, notées *X* (ou *NOT*), *Y* et *Z*, qui appliquent leurs fonctions de transfert (respectivement une permutation et deux rotations d'angle $\pi$), à un unique *qubit* et sont respectivement définies comme suit :

$$X\,(NOT) \triangleq \begin{pmatrix} 0 & 1 \\ 1 & 0 \end{pmatrix}$$

$$Y \triangleq \begin{pmatrix} 0 & -i \\ i & 0 \end{pmatrix}$$

$$Z \triangleq \begin{pmatrix} 1 & 0 \\ 0 & -1 \end{pmatrix}$$

- la porte « *Controlled-NOT* », notée *CNOT,* qui applique sa fonction de transfert (une inversion) à deux *qubits* et est définie comme suit :

$$CNOT \triangleq \begin{pmatrix} 1 & 0 & 0 & 0 \\ 0 & 1 & 0 & 0 \\ 0 & 0 & 0 & 1 \\ 0 & 0 & 1 & 0 \end{pmatrix}$$

- la porte *SWAP* (ou *qSWAP*), qui applique sa fonction de transfert (une permutation) à deux *qubits* et est définie comme suit :

$$qSWAP \triangleq \begin{pmatrix} 1 & 0 & 0 & 0 \\ 0 & 0 & 1 & 0 \\ 0 & 1 & 0 & 0 \\ 0 & 0 & 0 & 1 \end{pmatrix}$$

- la porte de phase contrôlée, notée $R_\phi$, associée à un angle noté $\phi$ (dans la notation employée pour décrire le *qubit* sur la sphère de Bloch), qui applique sa fonction de transfert (une rotation d'angle $\phi$) à un unique *qubit* et est définie comme suit :

$$R_\phi \triangleq \begin{pmatrix} 1 & 0 & 0 & 0 \\ 0 & 1 & 0 & 0 \\ 0 & 0 & 1 & 0 \\ 0 & 0 & 0 & e^{i\phi} \end{pmatrix}$$

Il n'entre pas dans le cadre de la présente description de préciser la manière précise dont ces portes peuvent être implémentées dans le registre quantique **QR.** Cette implémentation est notamment esquissée dans Nielsen & Chuang, op.cit. 7.6.3 p.319 et s. Voir également Cirac & Zoller, op.cit., qui fournissent des indications pour implémenter de la porte *CNOT.*

Précisons cependant que l'implémentation d'une porte quantique élémentaire est effectuée par bombardement laser d'un ou plusieurs ions, à une (des) longueur(s) d'onde prédéterminée(s), une puissance prédéterminée, et pendant une durée d'illumination prédéterminée. Bien que l'état initial des ions (et donc des qubits) avant l'implémentation de la porte ne soit pas connu, la fonction correspondant à la porte quantique implémentée dans le registre quantique **QR** est connue.

Pour implémenter un circuit quantique complet, composé d'une séquence de portes logiques, on règle d'abord les qubits à une valeur initiale, au moyen de l'unité **QWU** d'écriture.

Les qubits, notés $|q_i\rangle$ (où $i$ est un entier compris ici entre 0 et 7) peuvent être représentés par un vecteur d'état noté $|\psi\rangle$ :

$$|\psi\rangle = \begin{pmatrix} |q_0\rangle \\ |q_1\rangle \\ |q_2\rangle \\ |q_3\rangle \\ |q_4\rangle \\ |q_5\rangle \\ |q_6\rangle \\ |q_7\rangle \end{pmatrix}$$

L'état initial du vecteur d'état est par ex. (et de préférence) la valeur nulle :

$$|\psi\rangle = \begin{pmatrix} 0 \\ 0 \\ 0 \\ 0 \\ 0 \\ 0 \\ 0 \\ 0 \end{pmatrix}$$

Puis, à partir de cette valeur initiale du vecteur état, on implémente successivement les portes du circuit (sans effectuer de mesure intermédiaire), et on effectue une mesure lorsque la séquence est achevée.

On note $|\psi'\rangle$ le vecteur d'état représentatif des qubits en sortie du circuit quantique.

L'état des ions (et donc des qubits) peut être mesuré par l'unité **QRU** de lecture. Cette mesure est ici optique ; elle consiste à détecter les photons (c'est-à-dire la lumière) émise par les électrons des couches externes d'un ion lors du retour à l'état d'énergie fondamental (ion « allumé », correspondant à la valeur 10) du qubit).

A contrario, la mécanique quantique étant de nature probabiliste, l'absence d'émission photonique par un ion (ion « éteint ») n'est pas représentative de son état, car le temps nécessité par la mesure est inférieur à la durée de vie de l'état excité métastable. Il convient donc de réitérer un certain nombre de fois (par ex. mille fois) l'implémentation du circuit, pour conférer aux mesures une certaine robustesse et attribuer la valeur 11) au qubit correspondant à un ion éteint de manière répétée. Selon un mode de réalisation particulier, on peut simplement appliquer à chaque qubit la valeur (10) ou $|1\rangle$ correspondant à la majorité des mesures effectuées sur l'ion correspondant (respectivement allumé ou éteint).

Pour effectuer ces mesures, l'unité **QRU** de lecture, reliée à l'unité **QCA** centrale de contrôle, comprend une optique **11** (en pratique sous forme d'un microscope) et un capteur **12** photosensible, typiquement du type à transfert de charge (*Charged Coupled Device* ou CCD), pourvu d'une matrice d'éléments qui fournissent chacun en sortie un signal électrique de valeur proportionnelle à l'intensité du flux lumineux incident.

L'unité **QRU** de lecture capte ainsi une rangée de taches lumineuses plus ou moins intenses (selon que l'ion visé est allumé ou éteint) et fournit en sortie un signal électrique analogique (représenté par une courbe sur la **FIG.3**). Ce signal est traité par un convertisseur analogique-numérique (**ADC**) qui en assure la conversion en un signal numérique relayé à l'unité **QCA** centrale de contrôle.

Dans l'exemple illustré, où le registre quantique **QR** contient huit ions (correspondant respectivement à huit qubits numérotés $q_0$ à $q_7$), on voit que la séquence illustrée (correspondant à la moyenne des mesures effectuées, réitérées par ex. mille fois) est : éteint-allumé-allumé-éteint-allumé-allumé-éteint-éteint, ce qui correspond à la valeur suivante des qubits, telle que représentée par leur vecteur d'état $|\psi'\rangle$ :

$$|\psi'\rangle = \begin{pmatrix} 1 \\ 0 \\ 0 \\ 1 \\ 0 \\ 0 \\ 1 \\ 1 \end{pmatrix}$$

Le calcul quantique ainsi réalisé par le **QPU** est supervisé par le **CPU.** A cet effet, le **QPU** est configuré en tant qu'esclave (ou périphérique) de l'ordinateur **2** classique, lequel est lui-même configuré en tant que maître pour assurer la supervision du **QPU.**

En pratique, l'ordinateur **2** classique inclut un programme pilote contenant des instructions pour assurer la supervision du **QPU.**

Ces instructions comprennent notamment :

- ◦ chargement (**Load**) : cette instruction consiste à communiquer au **QPU** une définition d'un circuit quantique à implémenter ;
- ◦ initialisation (**Set**) : cette instruction consiste à communiquer au **QPU** des valeurs initiales auxquelles régler le(s) registre(s) quantique(s) (c'est-à-dire le vecteur d'état $|\psi\rangle$) ;
- ◦ exécution (**Run**) : cette instruction consiste à communiquer au QPU un ordre de calcul du circuit quantique, c'est-à-dire d'implémentation du circuit sur le(s) registre(s) quantique(s) ;
- ◦ obtention (**Get**) : cette instruction consiste à interroger le **QPU** pour obtenir des valeurs finales du (des) registre(s) quantique(s) suivant l'implémentation du circuit quantique.

Les communications sont supervisées par le **CPU** et réalisées via les unités **CI/O**, **QI/O** de gestion des entrées et sorties.

La supervision du **QPU** par l'ordinateur **2** classique est rendue possible par le fait que, si l'implémentation d'un circuit quantique ne peut être concrètement réalisée que sur un registre quantique **QR,** la définition de ce circuit quantique, en revanche, peut être effectuée par le **CPU,** au sein d'un programme qui peut comporter des instructions exécutables par ailleurs, de manière autonome, par le **CPU.**

Ainsi, il est possible, pour les besoins de l'exécution d'un programme contenant un premier jeu d'instructions exécutables par le **CPU** de manière autonome et un second jeu d'instructions que le **CPU** ne peut pas exécuter :

- de générer (ou d'appeler, à partir d'une mémoire) à la volée, au moyen du **CPU,** un (ou plusieurs) circuit(s) quantique(s) modélisant le second jeu d'instructions ;
- de faire implémenter par le **QPU,** sur requête du **CPU,** le(s) circuit(s) quantique(s) ainsi généré, grâce aux instructions **Load, Set** et **Run** ;
- de récupérer le résultat de cette implémentation, grâce à l'instruction **Get.**

Le circuit quantique n'est pas nécessairement constitué par le **CPU.** Il peut être prédéfini et stocké (en binaire) dans une mémoire de l'ordinateur **2** classique. Dans ce cas, la définition du circuit quantique (communiquée avec l'instruction **Load**) contient l'architecture de ce circuit.

En variante, le circuit quantique peut être stocké (en binaire) dans la mémoire **QDD** de stockage de l'ordinateur **5** quantique. Dans ce cas, la définition du circuit quantique, communiquée avec l'instruction **Load,** contient une adresse mémoire où est stockée l'architecture du circuit quantique.

On peut qualifier d'hybride ce système **1** informatique, car il comprend un ordinateur **2** classique et au moins un processeur quantique **QPU** qui communiquent. Les programmes sont stockés dans la mémoire **CDD** de stockage de l'ordinateur **2** classique, et leur exécution est supervisée par le **CPU.**

Cette architecture offre de nombreux avantages.

Premièrement, il est possible de réaliser des programmes hybrides (ou composites) contenant à la fois des séquences d'instructions exécutables par le **CPU** seul, et d'autres séquences d'instructions exécutables par le **QPU** seul (sous la supervision du **CPU**).

En effet, le **CPU** est configuré pour détecter les séquences d'instructions exécutables par le **QPU** et pour lui ordonner de les exécuter, tandis que lui-même exécute ses propres séquences.

La programmation est avantageusement du type objet, de sorte que les séquences d'instructions destinées au **QPU** se présentent avantageusement sous forme de requêtes d'appel de subroutines prédéterminées, mémorisées soit dans la mémoire de stockage **CDD** de l'ordinateur **2** classique, soit dans la mémoire de stockage **QDD** de l'ordinateur **5** quantique.

Deuxièmement, cette architecture permet de faire l'économie d'une hybridation au niveau du processeur même - c'est-à-dire qu'il n'est pas nécessaire de revoir complètement l'architecture des processeurs pour leur intégrer des fonctionnalités quantiques : il suffit de relier l'ordinateur **2** classique (convenablement configuré et programmé) au **QPU.** Le **QPU,** quant à lui, peut demeurer une unité de traitement spécialisée dans l'implémentation des circuits quantiques, tout en étant convenablement configuré pour pouvoir être supervisé, comme tout périphérique, par l'ordinateur **2** classique.

Troisièmement, de manière corollaire à ce qui vient d'être dit, cette architecture peut être réalisée dès à présent, sans attendre que soient réalisés des progrès dans l'intégration des processeurs quantiques.

Quatrièmement, seules quelques adaptations suffisent aux langages de programmation connus pour intégrer les fonctionnalités nécessaires à la génération à la volée (ou l'appel) des circuits quantiques par le **CPU.** Ainsi, la subroutine fournie ci-après à titre d'exemple est écrite dans une version enrichie du langage Python.

Cinquièmement, ce système **1** informatique hybride présente des performances optimisées, car il ne fait appel au **QPU** (et de manière dynamique) que lorsque cela apparaît nécessaire dans l'exécution du programme.

Sixièmement, une éventuelle indisponibilité du **QPU** ne stoppe pas l'exécution par le **CPU** des séquences d'instructions qui sont dévolues à ce dernier, au bénéfice de la robustesse du système. A cet effet, en pratique, le contrôle exercé par le **CPU** sur le **QPU** peut comprendre une instruction d'interrogation de disponibilité (**Ready?**), adressée par le **CPU** au **QPU** préalablement à l'instruction **Set.** En cas d'indisponibilité (réponse No à l'instruction **Ready?**), le **CPU** peut différer sa demande d'exécution des instructions dévolues au **QPU,** puis la réitérer après un nombre prédéterminé de cycles d'horloge.

Exemple

On fournit à présent un exemple de subroutine qui peut être générée (ou appelée) par le **CPU** pour une exécution par le **QPU** sur son registre quantique.

Il s'agit d'une programmation de l'algorithme de Grover, qui permet d'extraire d'une base de données N entrées une information en un nombre d'interrogations réitérées $\sqrt{N}$ fois seulement (cf. Grover, op.cit.).

Le langage employé, PyAQASM, est un dérivé de Python, auquel quelques adaptations ont été apportées pour introduire la désignation des portes logiques quantiques. On notera l'emploi, en tête de certaines séquences, du symbole **#** qui permet l'introduction de commentaires - ce symbole est ignoré par le compilateur.

```
# coding: utf-8
import os
import sys
sys.path.append('pyAQASM')

##### User-dependent parameter here #####
# ----------------------------------------
keySelect=15

# Grover generation functions
# ---------------------------

# Import the python wrapper package
from AQASM import *

# Staircase decomposition of multiple-control Toffoli gate into
CCNOT gates
# This requires a list of temporary qubits (will return to original
state)
def StairCaseToffoli(ctrlList, target, scratchList, AQASM_file):
    if (len(ctrlList) == (len(scratchList)+2)):
        AQASM_file.apply(CCNOT,
Reg.getQubits([ctrlList[len(ctrlList)-1],
scratchList[len(scratchList)-1], target]))
        for i in range(len(scratchList)-2,-1,-1):
            AQASM_file.apply(CCNOT, Reg.getQubits([ctrlList[i]+2,
scratchList[i], scratchList[i+1]]))
        AQASM_file.apply(CCNOT, Reg.getQubits([ctrlList[0],
ctrlList[1], scratchList[0]]))
        for i in range(len(scratchList)-1):
            AQASM_file.apply(CCNOT, Reg.getQubits([ctrlList[i+2],
scratchList[i], scratchList[i+1]]))
        AQASM_file.apply(CCNOT,
Reg.getQubits([ctrlList[len(ctrlList)-1],
scratchList[len(scratchList)-1], target]))
        for i in range(len(scratchList)-2,-1,-1):
```

```
        AQASM_file.apply(CCNOT, Reg.getQubits([ctrlList[i]+2,
scratchList[i], scratchList[i+1]]))
        AQASM_file.apply(CCNOT, Reg.getQubits([ctrlList[0],
ctrlList[1], scratchList[0]]))
        for i in range(len(scratchList)-1):
            AQASM_file.apply(CCNOT, Reg.getQubits([ctrlList[i+2],
scratchList[i], scratchList[i+1]]))


# Decomposition of multiple-control Toffoli gate into CCNOT gates
# This requires a single ancillary qubit
def ToffoliDecompose(ctrlList, target, anc, AQASM_file):
    cLst = []
    sLst = []
    for i in range(len(ctrlList)):
        if (i<=((len(ctrlList)+1)/2)):
            cLst.append(i)
        else:
            sLst.append(i)
    StairCaseToffoli(cLst, anc, sLst, AQASM_file)
    cLst2 = []
    sLst2 = []
    for i in range(len(sLst)-1):
        cLst2.append(sLst[i])
        sLst2.append(cLst[i])
    cLst2.append(sLst[len(sLst)-1])
    cLst2.append(anc)
    StairCaseToffoli(cLst2, target, sLst2, AQASM_file)
    StairCaseToffoli(cLst, anc, sLst, AQASM_file)
    StairCaseToffoli(cLst2, target, sLst2, AQASM_file)

# AQASM file generation depending on the keySelect parameter
# ----------------------------------------------------------

# Grover's algorithm
# Define the key value (value for searching)
key = keySelect

# Grover's algorithm
# Define the key value (value for searching)
key = keySelect
bit_length = key.bit_length()
if (bit_length %2 != 0):
    bit_length += 1 #round up to even number

# Minimum of 6 qubits (need to custom the circuit for less than 6
qubits, for simplicity just use more qubits instead)
if (bit_length < 6):
    bit_length = 6

# Define the number of qubits
nbQubits = bit_length
file_name = "Grover_"+str(nbQubits)+".aqasm"

# Create the AQASM file by providing the filename and number of
qubits
AQASM_prog = AQASM()

Reg = AQASM_prog.allocateRegister(nbQubits + 2)
```

```
# All qubits are control qubits
ctrlList = range(nbQubits)
# One target qubit
tar = nbQubits
# One ancilla qubit
anc = nbQubits + 1


# Convert to binary
bFormat = "{0:0" + str(nbQubits) + "b}"
keyB = [int(x) for x in list(bFormat.format(key))]
keyBin = keyB[::-1]



# Apply Hadamard gates to all qubits
# Create equal superposition
for i in range(nbQubits):
    AQASM_prog.apply(H, Reg.get(i))
# put target qubit into minus state
AQASM_prog.apply(X, Reg.get(tar))
AQASM_prog.apply(H, Reg.get(tar))

#Repeat here in order to amplify further (if necessary)
for i in range(nbQubits):
    if (keyBin[i] == 0):
        AQASM_prog.apply(X, Reg.get(i))

# Apply a Toffoli gate where all qubits act as control
# -1 phase will be kicked back since the target is in minus state
ToffoliDecompose(ctrlList, tar, anc, AQASM_prog)

# Return qubits to intial values
for i in range(nbQubits):
    if (keyBin[i] == 0):
        AQASM_prog.apply(X, Reg.get(i))



# Inversion around mean value to do amplitude amplification
# It's similar to oracle comparing to zero
for i in range(nbQubits):
    AQASM_prog.apply(H, Reg.get(i))
for i in range(nbQubits):
    AQASM_prog.apply(X, Reg.get(i))

ToffoliDecompose(ctrlList, tar, anc, AQASM_prog)

for i in range(nbQubits):
    AQASM_prog.apply(X, Reg.get(i))
for i in range(nbQubits):
    AQASM_prog.apply(H, Reg.get(i))

# Return target qubit to computational basis
AQASM_prog.apply(H, Reg.get(tar))

# Finish, write to file and close
AQASM_prog.export(file_name)

# Show the contents of the generated file
# ----------------------------------------
```

```
with open(file_name, 'r') as f:
        print(f.read())

# Run the generated script
# -----------------------

os.system("./run_calc.sh " + file_name)
```

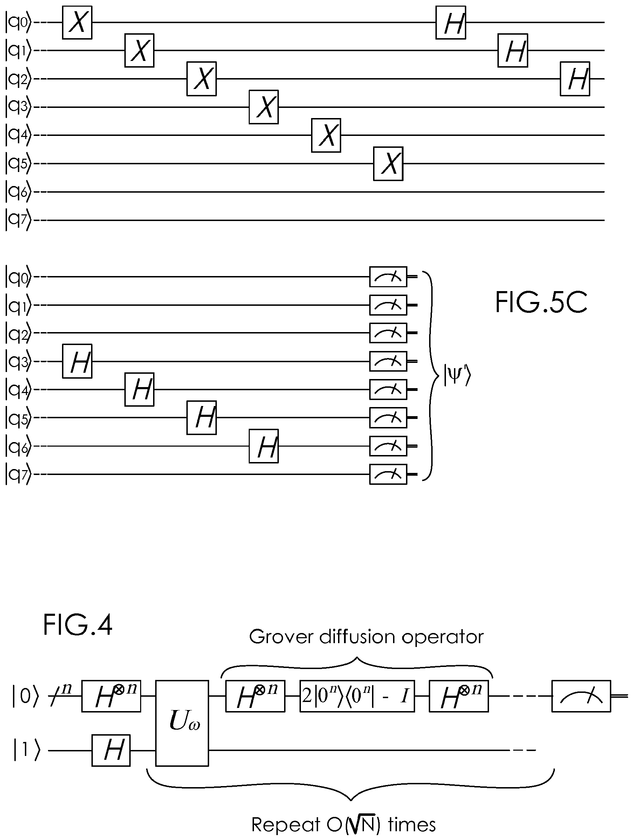

Une modélisation du circuit quantique (complexe) correspondant à cet algorithme est illustré sur la **FIG.4.** Ce circuit comprend un opérateur transversal appliqué à tous les bits, appelé Oracle, suivi d'un opérateur de diffusion (Grover diffusion operator), l'ensemble étant répété un nombre de fois dans l'ordre de $\sqrt{N}$ (Repeat $O(\sqrt{N})$ times), où $N$ est, on le rappelle, le nombre d'entrée de la base de données à interroger.

Pour générer un circuit quantique simplifié équivalent à ce circuit complexe, on utilise les principes suivants, selon lesquels :

- tout circuit quantique peut être représenté par un circuit quantique équivalent constitué de portes élémentaires à un qubits (typiquement H et X, cf. ci-dessus) et de portes de Toffoli $C^kNOT$ à contrôle multiple (où le nombre k de qubits de contrôle est strictement supérieur à deux), cf. Sleator & Weinfurter, op.cit. ;

- toute porte de Toffoli $C^kNOT$ à contrôle multiple (employée par l'algorithme de Grover) peut être représentée par une combinaison de portes de Toffoli CCNOT à double contrôle, ce qui repose sur les principes édictés par Toffoli lui-même dans Reversible Computing, Tech. Memo MIT/LCS/TM-151, MIT Lab. for Com, Sci. 1980, cité notamment par Muthukrishnan, Classical and Quantum Logic Gates: An Introduction to Quantum Computing, Quantum Information Seminar, RCQI, 3 sept. 1999, p.4.

Cet algorithme est d'abord compilé dans un langage d'assemblage. On fournit ci-après le résultat de la compilation, pour un nombre de qubits égal à huit, identifiés sous les symboles [$qi$] où $i$ est compris entre 0 et $n = 8$ :

```
BEGIN

qubits 8
H q[0]
H q[1]
H q[2]
H q[3]
H q[4]
H q[5]
X q[6]
H q[6]
X q[4]
X q[5]
CCNOT q[3],q[5],q[7]
CCNOT q[2],q[4],q[5]
CCNOT q[0],q[1],q[4]
CCNOT q[2],q[4],q[5]
CCNOT q[3],q[5],q[7]
CCNOT q[2],q[4],q[5]
CCNOT q[0],q[1],q[4]
CCNOT q[2],q[4],q[5]
CCNOT q[7],q[0],q[6]
CCNOT q[4],q[5],q[0]
CCNOT q[7],q[0],q[6]
CCNOT q[4],q[5],q[0]
CCNOT q[3],q[5],q[7]
CCNOT q[2],q[4],q[5]
CCNOT q[0],q[1],q[4]
```

```
CCNOT q[2],q[4],q[5]
CCNOT q[3],q[5],q[7]
CCNOT q[2],q[4],q[5]
CCNOT q[0],q[1],q[4]
CCNOT q[2],q[4],q[5]
CCNOT q[7],q[0],q[6]
CCNOT q[4],q[5],q[0]
CCNOT q[7],q[0],q[6]
CCNOT q[4],q[5],q[0]
X q[4]
X q[5]
H q[0]
H q[1]
H q[2]
H q[3]
H q[4]
H q[5]
X q[0]
X q[1]
X q[2]
X q[3]
X q[4]
X q[5]
CCNOT q[3],q[5],q[7]
CCNOT q[2],q[4],q[5]
CCNOT q[0],q[1],q[4]
CCNOT q[2],q[4],q[5]
CCNOT q[3],q[5],q[7]
CCNOT q[2],q[4],q[5]
CCNOT q[0],q[1],q[4]
CCNOT q[2],q[4],q[5]
CCNOT q[7],q[0],q[6]
CCNOT q[4],q[5],q[0]
CCNOT q[7],q[0],q[6]
CCNOT q[4],q[5],q[0]
CCNOT q[3],q[5],q[7]
CCNOT q[2],q[4],q[5]
CCNOT q[0],q[1],q[4]
CCNOT q[2],q[4],q[5]
CCNOT q[3],q[5],q[7]
CCNOT q[2],q[4],q[5]
CCNOT q[0],q[1],q[4]
CCNOT q[2],q[4],q[5]
CCNOT q[7],q[0],q[6]
CCNOT q[4],q[5],q[0]
CCNOT q[7],q[0],q[6]
CCNOT q[4],q[5],q[0]
X q[0]
X q[1]
X q[2]
X q[3]
X q[4]
X q[5]
H q[0]
H q[1]
H q[2]
H q[3]
H q[4]
```

H q[5]
H q[6]

END

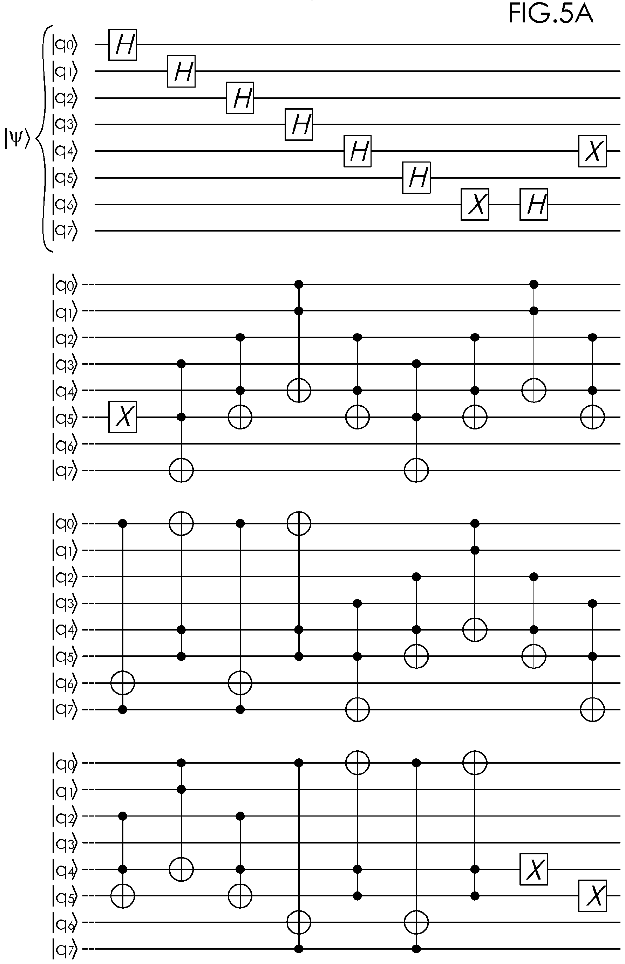

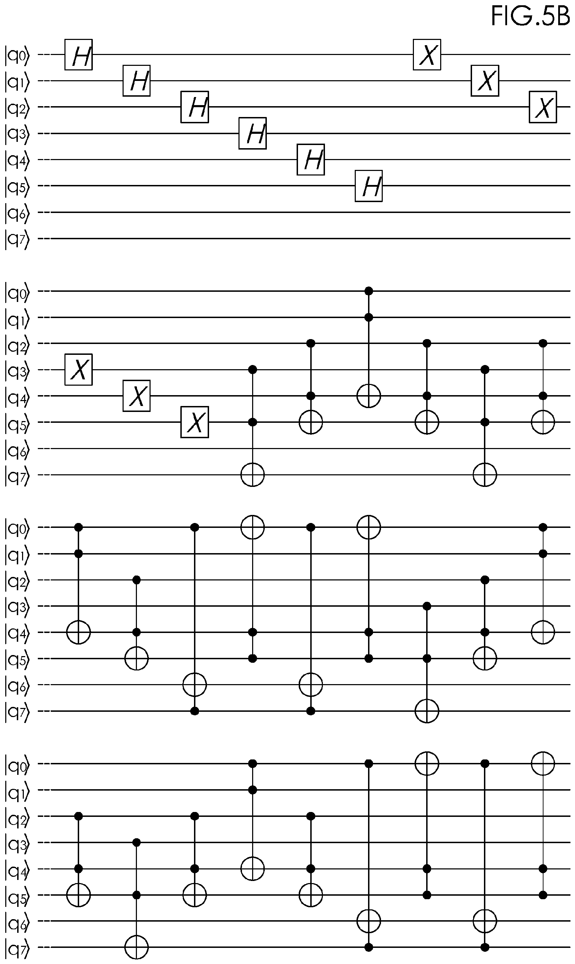

Le circuit simplifié ainsi généré est représenté sur la **FIG.5,** subdivisée en trois parties (**FIG.5A**, planche 4 ; **FIG.5B,** planche 5 ; **FIG.5C,** planche 6), dont chacune se lit comme une partition musicale composée de portées comprenant chacune autant de lignes que de qubits (ici huit). Les pointillés au début d'une portée signifient que cette portée se situe dans le prolongement de la portée qui la surmonte (autrement dit, qui la précède).

Chaque porte logique élémentaire (ici H, X ou CCNOT) est programmée sous forme d'une subroutine dédiée mémorisée par ex. dans la mémoire de stockage de l'ordinateur quantique.

L'implémentation de la porte, ordonnée par le **CPU,** est commandée par le **QPU** qui communique à l'unité d'écriture **QWU** des instructions de contrôle déterminées par la subroutine.

Ces instructions se traduisent concrètement, pour le(s) faisceaux **10** laser(s) associé(s) au(x) qubit(s) impliqués dans la porte à implémenter, par des paramètres prédéterminés de longueur d'onde, d'intensité et de durée d'allumage.

L'implémentation de la porte est réitérée un nombre prédéterminé de fois (par ex. mille fois).

A la fin de chaque implémentation, l'état des ions (c'est-à-dire des qubits) est mesuré par l'unité de lecture **QRU.**

Les mesures font ensuite l'objet d'un traitement statistique pour déterminer l'état le plus probable du registre à la sortie du circuit quantique implémenté, et le résultat, sous forme du vecteur d'état $|\psi\rangle$, est pris en compte par l'unité centrale **QCA** de contrôle qui le communique au **CPU** en réponse à l'instruction **Get.**


## Revendications

1. Système (**1**) informatique, qui comprend :

   - un ordinateur (**2**) classique, équipé d'un processeur (**CPU**) classique pourvu d'au moins un registre (**CR**) à transistors ;
   - un processeur (**QPU**) quantique, pourvu d'au moins un registre (**QR**) quantique,
   - le processeur (**QPU**) quantique est configuré en tant qu'esclave de l'ordinateur (**2**) classique, **caractérisé en ce que**:
   - l'ordinateur (**2**) classique est configuré en tant que maître pour superviser le processeur (**QPU**) quantique au moyen des instructions suivantes :

      ◦ chargement, consistant à communiquer au processeur (**QPU**) quantique une définition d'un circuit quantique à implémenter ;
      ◦ initialisation, consistant à communiquer au processeur (**QPU**) quantique des valeurs initiales auxquelles régler le ou les registres quantiques ;
      ◦ exécution, consistant à communiquer au processeur (**QPU**) quantique un ordre d'implémentation du circuit quantique ;
      ◦ obtention, consistant à interroger le processeur (**QPU**) quantique pour obtenir des valeurs finales du registre quantique, issues de l'implémentation du circuit.

2. Système (**1**) informatique selon la revendication 1, dans lequel l'ordinateur (**2**) classique est programmé pour générer le circuit quantique à la volée.

3. Système (**1**) informatique selon la revendication 1, dans lequel une architecture du circuit quantique à implémenter est mémorisée dans une mémoire (**CDD**) de l'ordinateur classique.

4. Système (**1**) informatique selon la revendication 1, dans lequel une architecture du circuit quantique est mémorisée dans une mémoire (**QDD**)associée au processeur quantique.

5. Système (**1**) informatique selon l'une des revendications précédentes, dans lequel le ou les registres (**QR**) quantiques sont à ions piégés.

**Patentansprüche**

1. Computersystem (1), das Folgendes umfasst:

   - einen klassischen Computer (2), der mit einem klassischen Prozessor (CPU) ausgestattet ist, der mit wenigstens einem Transistorregister (CR) versehen ist;
   - einen Quantenprozessor (QPU), der mit wenigstens einem Quantenregister (QR) versehen ist,
   - wobei der Quantenprozessor (QPU) als Slave des klassischen Computers (2) konfiguriert ist, **dadurch gekennzeichnet, dass**:
   - der klassische Computer (2) als Master konfiguriert ist, um den Quantenprozessor (QPU) mittels folgender Befehle zu beaufsichtigen:

     ◦ Laden, bestehend aus der Übermittlung einer Definition einer zu implementierenden Quantenschaltung an den Quantenprozessor (QPU);
     ◦ Initialisieren, bestehen aus der Übermittlung von Anfangswerten an den Quantenprozessor (QPU), auf die das/die Quantenregister geregelt werden sollen;
     ◦ Ausführen, bestehend aus der Übermittlung eines Befehls zum Implementieren der Quantenschaltung an den Quantenprozessor (QPU);
     ◦ Erhalten, bestehend aus dem Abfragen des Quantenprozessors (QPU), um Endwerte des Quantenregisters aus der Implementierung der Schaltung zu erhalten.

2. Computersystem (1) nach Anspruch 1, wobei der klassische Computer (2) dazu programmiert ist, die Quantenschaltung umgehend zu generieren.

3. Computersystem (1) nach Anspruch 1, wobei eine Architektur der zu implementierenden Quantenschaltung in einem Speicher (CDD) des klassischen Computers gespeichert ist.

4. Computersystem (1) nach Anspruch 1, wobei eine Architektur der Quantenschaltung in einem Speicher (QDD) gespeichert ist, der dem Quantenprozessor zugeordnet ist.

5. Computersystem (1) nach einem der vorhergehenden Ansprüche, wobei es sich um Quantenregister (QR) mit Ionenfallen handelt.

**Claims**

1. A computer system (1), which comprises:

   - a conventional computer (2), equipped with a conventional processor (CPU) provided with at least one transistor register (CR);
   - a quantum processor (QPU), provided with at least one quantum register (QR),
   - the quantum processor (QPU) is configured as a slave of the conventional computer (2),

   **characterised in that**:

   - the conventional computer (2) is configured as a master to supervise the quantum processor (QPU) by means of the following instructions:

     ◦ loading, consisting in communicating to the quantum processor (QPU) a definition of a quantum circuit to be implemented;
     ◦ initialisation, consisting in communicating to the quantum processor (QPU) initial values at which the quantum register(s) is/are set;
     ◦ execution, consisting in communicating to the quantum processor (QPU) an order for implementing the quantum circuit;
     ◦ obtainment, consisting in interrogating the quantum processor (QPU) to obtain final values of the quantum register, resulting from the implementation of the circuit.

2. The computer system (1) according to claim 1, wherein the conventional computer (2) is programmed to generate the quantum circuit on the fly.

3. The computer system (1) according to claim 1, wherein an architecture of the quantum circuit to be implemented is stored in a memory (CDD) of the conventional computer.

4. The computer system (1) according to claim 1, wherein an architecture of the quantum circuit is stored in a memory (QDD) associated with the quantum processor.

5. The computer system (1) according to one of the preceding claims, wherein the quantum register(s) (QR) is/are with trapped ions.

FIG.1

FIG.2

FIG.3

QCA

QIB

QWU

QPU

QIB

10

7

9

8

9

X

8

QR

11

QRU

12

ADC

10010011

#

∩

QIB

12

q0 q1 q2 q3 q4 q5 q6 q7

EP 3 425 497 B1

FIG.5A

FIG.5B

FIG.5C

FIG.4

Grover diffusion operator

$|0\rangle$ $/^{n}$ $H^{\otimes n}$ $U_{\omega}$ $H^{\otimes n}$ $2|0^{n}\rangle\langle 0^{n}| - I$ $H^{\otimes n}$

$|1\rangle$ $H$

Repeat O($\sqrt{N}$) times

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 20060101236 A

### Littérature non-brevet citée dans la description

- Basic Concepts. **BENENTI et al.** Principles of Quantum Computation and Information. World Scientific Publishing Co, 2004, vol. I
- Polynomial-Time Algorithms for Prime Factorization and Discrete Logarithms on a Quantum Computer. **PETER W. SHOR.** Proceedings of the 35th Annual Symposium on Foundations of Computer Science, Santa Fe, NM. IEEE Computer Society Press, 20 Novembre 1994, 124-134
- Shor's Quantum Factoring Algorithm. **LOMONACO.** Proceedings of Symposia in Applied Mathematics. Université du Maryland, 2000
- A fast quantum mechanical algorithm for database search. **GROVER.** Proceedings, 28th Annual ACM Symposium on the Theory of Computing (STOC). Mai 1996, 212-219
- Quantum Mechanics help in searching for a needle in a haystack. *Phys.Rev.Lett,* 1997, vol. 79, 325-328
- **A. NIELSEN ; I. CHUANG.** Quantum Computation and Quantum Information. Cambridge University Press, 2010, vol. II, 171-204
- **CHARLES CORGE.** L'informatique quantique,. *Ellipses,* 2011, ISBN 978-2-7298-6314-2, 107
- **SLEATOR ; WEINFURTER.** Elementary Gates for quantum computation,. *Physical Review A,* 22 Mars 1995
- **DAVID P. DIVINCENZO.** The Physical Implémentation of Quantum Computation. IMB T.J. Watson Research Center, 01 Février 2008
- **CIRAC ; ZOLLER.** Quantum Computations with Cold Trapped Ions,. Institut für Theoretische Physik, Universität Innsbruck, 30 Novembre 1994
- **SCHMIDT-KALER ; BLATT et al.** Realization of the Cirac-Zoller controlled-NOT quantum gate. *Nature,* 27 Mars 2003, vol. 422, 408-411

- Assessing the progress of trapped-ion processors towards fault-tolerant quantum computation. **BLATT ; SCHMIDT-KALER et al.** arXiv:1705.02771. Cornell University Library, 08 Mai 2017
- **SCHMIDT-KALER et al.** *Realization of the Cirac-Zoller controlled-NOT quantum gate*
- **P. SELINGER.** A Brief Survey Of Quantum Programming Languages. *Proceedings of the Seventh International Symposium on Functional and Logic Programming,* 2004, 1-6
- **A. ABHARI et al.** Scaffold: Quantum Programming Language. IARPA, 24 Juillet 2012
- **A. GREEN et al.** Quipper: A Scalable Quantum Programming Language. *ACM SIGPLAN Notices,* 2013, vol. 48 (6), 333-342
- A Practical Quantum Instruction Set Architecture. **R. SMITH et al.** arXiv:1608.03355. Rigetti Computing, Cornell University Library, 11 Août 2016
- **A. CROSS et al.** Open Quantum Assembly Language. *IBM,* 10 Janvier 2017
- **R. SMITH et al.** *Quantum Virtual Machine ou QVM,* 12
- The European Physical Journal D. Springer, 01 Août 2003, vol. 25, 181-200
- COMMUNICATIONS OF THE ACM, 20150723. Association for Computing Machinery, Inc, vol. 58, 52-61
- First Draft of a Report on the EDVAC. Moore School of Electrical Engineering, University of Pennsylvania, 30 Juin 1945
- **CAZES ; DELACROIX.** Architecture des machines et des systèmes informatiques. 2015, 192
- Reversible Computing. **TOFFOLI.** Tech. Memo MIT/LCS/TM-151. MIT Lab. for Com, Sci, 1980
- **MUTHUKRISHNAN.** Classical and Quantum Logic Gates: An Introduction to Quantum Computing,. *Quantum Information Seminar, RCQI,* 03 Septembre 1999, 4